# EUROPEAN PATENT SPECIFICATION

(11) **EP 2 493 975 B1**
(45) Date of publication and mention of the grant of the patent: **29.03.2017**
(21) Application number: 10770641.8
(22) Date of filing: 26.10.2010
(51) Int. Cl.: C08L 3/02, C08L 23/08, C08L 31/04, C08L 67/04

(54) **STARCH-BASED BIODEGRADABLE POLYMER; METHOD OF MANUFACTURE AND ARTICLES THEREOF**
STÄRKEBASIERTES, BIOLOGISCH ABBAUBARES POLYMER; HERSTELLUNGSVERFAHREN UND ENTSPRECHENDE ARTIKEL
POLYMÈRE BIODÉGRADABLE À BASE D'AMIDON, PROCÉDÉ DE FABRICATION ET ARTICLES CORRESPONDANTS

(30) Priority: 30.10.2009 EP 09174637
(43) Date of publication of application: 05.09.2012
(73) Proprietor: Stichting Kennis Exploitatie RB, 3601 XG Rotterdam (NL)
(72) Inventor: VAN HEEMST, Jacob, Johannes, NL-4904 EK Oosterhout (NL); ZANT, Erwin, NL-7513 CM Enschede (NL); SCHENNINK, Geraldus Gerardus Johannes, NL-7031 EB Wehl (NL); RODENBURG, Jan Arie, NL-4851 VK Ulvenho (NL); RODENBURG, Joost, NL-4851 VK Ulvenhout (NL); RODENBURG, Thijs, NL-3061 XG Rotterdam (NL)
(74) Representative: Nederlandsch Octrooibureau
(86) International application number: PCT/NL2010/050712
(87) International publication number: WO 2011/053131

(56) References cited:
- EP-A1- 0 539 604
- EP-A2- 0 408 503
- WO-A1-91/02025
- WO-A1-97/48764
- DE-A1- 4 333 858
- US-A- 5 087 650
- LOURDIN D ET AL: "Influence of equilibrium relative humidity and plasticizer concentration on the water content and glass transition of starch materials", POLYMER, ELSEVIER SCIENCE PUBLISHERS B.V, GB, vol. 38, no. 21, 1 October 1997 (1997-10-01), pages 5401-5406, XP004089393, ISSN: 0032-3861

## Description

### Field of invention

The current invention relates to a starch-based biodegradable polymeric composition comprising a vinyl ester polymer, which composition is melt processable using conventional thermoplastic processing equipment and technologies, e.g. injection moulding, film extrusion and thermoforming. Further is disclosed the manufacturing process to obtain said polymeric composition. The novel starch composition enables a high renewable resource content while solving the intrinsic brittleness of starch-plastics through improved morphology.

### Prior art

A compositions of starch and vinyl ester polymer, in particular polyvinylacetate, can be found in US 5,087,650, where a dry unmodified starch is used, of which it is explicitly stated that it has been neither destructurized nor gelatinized. It thus lacks thermoplastic properties, and the dry starch would degrade if applied at extrusion conditions typically performed with destructurized starch.

It is well known in the art how to use starch as a biodegradable thermoplastic material. Native starch as it occurs naturally has a granular structure and cannot be used directly as thermoplastic material. To enable thermoplastic behaviour, starch has to be destructurized: usually by applying mechanical work under elevated temperatures in the presence of (added) water and other possible processing agents (e.g. plasticizers and lubricants such as polyols and fatty acids). Converting native starch to thermoplastic starch (TPS) is typically achieved through extrusion processes. US 4,673,438 describes such methods for the conversion of native starch to thermoplastic starch and subsequent injection moulding processing. WO 2008/014573 discloses combinations of plasticizers to facilitate starch destructurization and to control specific properties of the obtained material in terms of mechanical properties, prevention of recrystallization and the prevention of migration of plasticizers.

The mechanical properties of starch-plastics however make those plastics less suitable for uses in products that require (some degree of) flexibility because starch-plastics tend to be very rigid and brittle. Numerous ways have been described to overcome these shortcomings: using additives; pre-treating the starch; using chemically or physically modified starches; blending with other biodegradable polymers; or combinations of these.

Confusingly, EP 408.503 and EP 539.604 both suggest the use of copolymers of vinyl acetate in the preparation of a polymer phase blend composition containing TPS. In both cases, however, the actual polymer blended with TPS is a polyvinyl alcohol, purposively obtained *after* hydrolysis of the vinylester groups. EP 539.604 uses the terminology "saponification". The blends ultimately formed contain vinyl alcohol, and are disadvantageously water-sensitive. Moreover, in the latter publication, the method to arrive at the biodegradable composition disadvantageously involves two separate manufacturing processes, thus complicating the production.

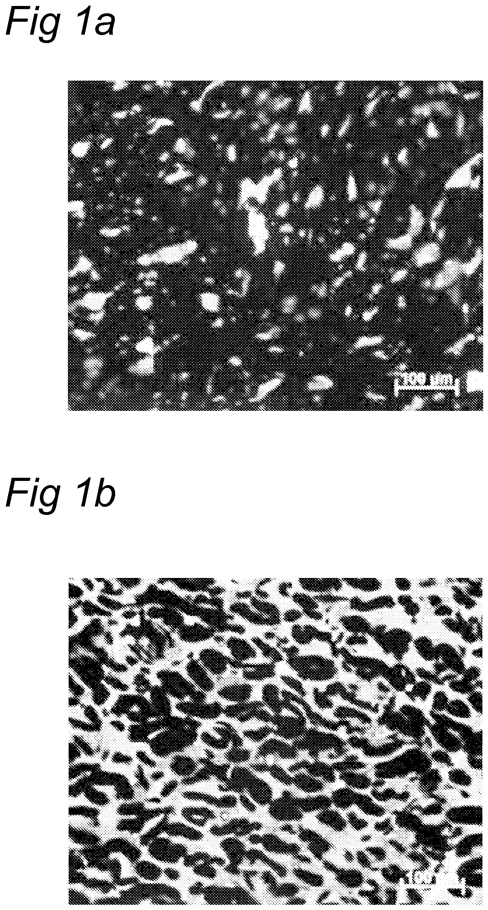

Furthermore, EP 408.503 and EP 539.604 all incorporate conventional plasticizers to facilitate the conversion of native starch into thermoplastic starch. This likewise applies to the teachings of WO 91/02025 and DE 43 33 858. In all cases, these plasticizers are added to the mixture of starch and vinylalcohol specifically to target starch, *before* any destructurization. The archetypical example of such a plasticizer is glycerol. No further considerations are given to the resulting morphology of the blend of starch, vinyl acetate and starch plasticizers. Such compositions have a morphology in which the thermoplastic starch forms the continuous phase. A typical example of the obtained morphology of such a blend -in this case thermoplastic starch and a vinyl ester polymer- is shown in Figure 1a as attached. However, over time these materials exhibit brittle behaviour because of retrogradation of starch and loss of water. Also, the resulting mechanical behaviour of the blend is dictated by the properties of the continuous phase, in this case thermoplastic starch. The biodegradable polymer may add flexibility to the blend, but its contribution in this morphology is limited.

WO 97/48764 describes formulations of biodegradable materials based on starch combined with one or more other biodegradable polymers such as polyvinylacetate. Diacetin is suggested as one of the suitable plasticizers applicable in the starch destructurization step. However, Lourdin [1] makes it clear that diacetin is ineffective in plasticizing starch. It was found that the glass transition temperature becomes independent of the amount of diacetin introduced in starch and phase separation of the starch occurs. Hence, the short-time success reported in the art is overshadowed by undesired phase separation in time.

US 6,506,824 discloses a combination of a starch, a cellulose ester, plasticizers for both phases and a compatibilizing agent. A homogeneous morphology is strived for. During the blending of the starch and cellulose both phases are subjected to shear stresses to ensure similar viscosities. The need for a compatibilizing agent -of which some of the suggested possibilities are (co)polymers grafted with aliphatic chains or starch soluble polyols- and the need for similar viscosities of the two phases make this a complex extrusion process. Also, no care is taken to avoid detrimental effects associated with the use of diacetin while destructurizing the starch.

US 6,730,724 discloses a dispersed phase in the form of domains at least 80 % of which has a size of less than 0.3 µm, embedded in a cellulose matrix. The composition is targeted for rapid biodegradation. This makes these compositions unsuited for applications that require a longer lifespan than 6 months. Like in US'824, the extrusion process involves a blending step in which the need for similar viscosities of the starch and cellulose phase exists. It is preferred to subject the starch and cellulose to bulking under the effect of a plasticizer. Diacetin is suggested as preferred plasticizer for starch, and 30 wt% native crystalline starch is allowed for in blending. In view of the above, the materials and method of US 6,730,724 renders it unsuited to provide for stable biodegradable compositions with a life-span of more than 6 months.

Hence, in the art the need continues to exist to provide stable starch-based biodegradable polymers with a longer lifespan having improved morphology and associated properties. There is also a need in the art to provide a simplified process to obtain such compositions and articles derived there from.

### Summary of the invention

It has been found that the morphology of the ultimate blend of starch and a vinyl ester polymer can be controlled and stabilized by inducing phase inversion of the components in the blend, thus rendering a continuous matrix comprising the vinyl ester polymer. It has been found possible to have the vinyl ester polymer in the composition contribute to the mechanical properties to a larger extent than before, and over longer periods of time. The reason rests in the morphology, as demonstrated in the accompanying examples (see Figure 1b). Advantageously, the problems of brittleness over time reported in the art are thus greatly diminished. Also, stability of the blend is greatly enhanced, in view of US 6,730,724, thus making the ultimate material suitable for applications requiring a life span of at least 6 months while maintaining the original flexibility and avoid brittleness.

In order to arrive at the above composition, in one embodiment the process of the invention comprises (i) starch destructurization, to obtain (a) destructurized or thermoplastic starch (TPS), and (ii) subsequent compounding of said TPS with (b) a vinyl ester polymer and (c) one or more plasticizer(s) for component (b), wherein said one or more plasticizer(s) (c) is introduced into the process only in step (ii) when all or a major or predominant part of said thermoplastic starch has been destructurized (from granular/native starch). The vinyl ester polymer may be present in step (i) or may be introduced after step (i), of a combination thereof. In one embodiment, said one or more plasticizer(s) (c) is introduced only after starch destructurization.

Steps (i) and (ii) together are referred to as the 'compounding process' or 'extrusion compounding process', since it involves a singular process and is performed in a single compounding or extrusion device. The destructurization step (i) is thus preferably performed immediately prior to compounding step (ii), in the same extrusion process also including the subsequent compounding of all of (a), (b) and (c) together. It is preferred that the plasticizer(s) (c) are introduced when at least 80 %, more preferably at least 90 %, most preferably at least 95 % of the starch is converted into thermoplastic starch. It is preferred that at least 70, 80, 90, 95 % of the vinyl ester polymer (b) is provided to the starch prior or while destructurizing said starch; the remainder of vinyl ester polymer (b) may be added together with the plasticizer(s) (c), to the TPS. Although starch destructurization is dependent on processing conditions such as shear, temperature etc., the skilled person has no problem to establish the exact conditions and to determine when starch is sufficiently destructurized. It is noted that starch destructurization is well-established in the field.

In the context of the invention, the verbs "destructurize" and "plasticize", and associated terminology, are used interchangeably. In the current invention the term "compounding" has the meaning of creating a homogeneous blend of all of the components with the desired morphology. This way the manufacturing process consists of a single extrusion process that is subdivided in two stages. In the first stage, starch and (a predominant part of the) vinyl ester polymer are present, referred to as the 'starch destructurization stage'. The second stage, marked by the introduction of component (c) after the starch has been converted into TPS, is where the final blend with desired morphology is obtained: the actual 'compounding stage'.

Here, the starch is destructurized prior to introducing (c) into the manufacturing process, in a single compounding device (e.g. extruder). Component (b) can be either introduced at the beginning of the process (together with the starch) or partly at the beginning and the remainder at the same point as (c). The process thus distinguishes from plasticizing starch directly during compounding (i.e. steps (i) and (ii) together), where TPS is obtained in the presence of all other essential components including plasticizer(s) (c). The process according to the invention does not necessitate compatibilizing polymers, such as taught in US 6,730,724. Since component (c) is added after starch destructurization, possible interference of component (c) with the destructurization is avoided.

In one embodiment according to the invention, to avoid the occurrence of the vinyl ester polymer in the dispersed phase, it is considered important to bring the viscosity of the vinyl ester polymer below that of the TPS. The skilled person will understand that the true meaning of "below" in the field is that the viscosity difference can be established beyond experimental error. In practice, this situation is reached when the vinyl ester polymer tends to form a continuous phase in which the TPS is dispersed. In terms of the L/D ratio, it preferably means that the plasticizer (c) and optionally part of the vinyl ester polymer (b) and/or other biodegradable polymers is introduced at or after L/D = 20 in a twin-screw extruder, preferably between L/D 20 and 30. It is of the essence that the native starch is substantially turned into TPS before introducing compound (c) into the extrusion, therewith starting the compounding stage. One or more plasticizers (c) is understood to comprise one or more substances that have a plasticizing effect on component (b) but no (significant) plasticizing effect on starch,

The viscosity decreasing effect of a vinyl ester plasticizer has been found sufficient to induce the desired morphology (such as shown in Fig. 1B) in a blend system of TPS and vinyl ester polymer. The plasticizer (e.g. diacetin) effectively lowers the viscosity of vinyl ester polymer below the viscosity of the thermoplastic starch specifically where the viscosity of the TPS is increased by removal of plasticizer (water) through degassing. The obtained morphology of a blend under the addition of a vinyl ester plasticizer -in this case diacetin- is shown in Figure 1b. The vinyl ester will be comprised in the continuous phase and the thermoplastic starch is found in the dispersed phase, where it forms large agglomerates; preferably at least 80 % of the dispersed phase has a size larger than 10 µm, preferably up to 150 µm. The size is determined by the largest cross section, and based on an average.

In one embodiment, the use of diacetin in destructurizing the starch prior to bringing it into contact with the vinyl ester polymer is avoided. This compound is not considered a suitable plasticizer for starch.

### Brier description of the drawings

Fig. 1a depicts the morphology of a thermoplastic starch/polyvinylacetate blend (80/20% ratio).
Fig. 1b depicts the morphology of a thermoplastic starch/polyvinylacetate blend (80/20% ratio) under addition of 3% diacetin (added after starch destructurization). Dark areas represent thermoplastic starch, light areas represent polyvinylacetate.
Fig. 2 is a schematic representation of the extruder configuration suited for the manufacture of the current polymeric composition.

### Detailed description of the invention

In one embodiment, the invention pertains to a process for manufacturing a biodegradable composition, wherein said process involves compounding of at least
(a) thermoplastic starch;
(b) vinyl ester polymer; and
(c) one or more plasticizer(s) for component (b),
wherein said thermoplastic starch is provided by destructurizing granular and/or native starch immediately prior to compounding, preferably to an extent that at least 80 %, more preferably at least 90 % of said starch is converted into TPS before said one or more plasticzer(s) (c) and optionally part of the vinyl ester polymer are introduced into the manufacturing process. Obviously, the term "optionally part" in the context of the invention means that the remainder is already present during the preceding destructurization step.

Worded differently, the invention pertains to a process for manufacturing a biodegradable composition, wherein said process involves destructurization (of the starch) and compounding of at least (a) destructurized starch, (b) vinyl ester polymer and (c) one or more plasticizer(s) for component (b), wherein said plasticizer(s) (c) and optionally part of the vinyl ester polymer are introduced into the process after destructurizing said starch, preferably to an extent that at least 80 wt%, more preferably at least 90 wt% of said starch has been thermoplasticized/destructurized.

The process is preferably realised using extrusion compounding, more preferably twin screw extrusion. A good overview reference on this technology is found in J.L. White, Twin Screw Extrusion: Technology and Principles, Hanser Publishers, New York (1991) ISBN 3446156917.

The general method to plasticize a polymer or decrease the viscosity of a polymer melt is to add a suitable plasticizer. A suitable plasticizer works by embedding itself between polymer chains, spacing them apart, resulting in a lower viscosity (when considering a polymer melt) or a decrease in glass transition temperature (when considering a solid polymer). Therefore the plasticizing effect can be qualified by the order of magnitude of that viscosity decrease or glass transition decrease. Depending on chemical structure and compatibility, a substance can be a suitable plasticizer for one polymer, but can be less effective or even not effective at all in another polymer. This is also the case at present: plasticizers (c), suitable for plasticizing vinylester polymers (thus descreasing the viscosity) are not those plasticizers suited for destructurizing starch. The plasticizers (c) for the vinyl ester polymer have less or little beneficial effect on destructurization of the starch, and are thus considered unsuitable plasticizers for TPS.

In a preferred embodiment, the plasticizer(s) is brought into contact with the destructurized starch only (more specifically, at the point where that component is introduced into the manufacturing process) when the viscosity of the thermoplasticized starch is increased through removal of plasticizer i.e. removal of water through degassing. The destructurization is performed conventionally, optionally using water and/or plasticizers for starch. With that respect, the use of diacetin before all or major part of the starch is destructurized into TPS is avoided. In other words, during destructurization it is preferred that no diacetin is added, and the amount of diacetin is thus preferably below detectable levels.

Subsequently, the TPS and vinyl ester polymer are compounded together with at least one plasticizer for the vinyl ester polymer, to lower its viscosity to that below the TPS. In a preferred embodiment, the vinyl ester plasticizer (c) comprises diacetin, and the starch is not brought into contact with said diacetin until at least 90 % of the starch is plasticized.

It is noted that it is known to those skilled in the art to determine the extent of destructurization, and the effect thereof on the starch viscosity. Van Tuil et al. [2] report that full destructurization of native starch is achieved on a relatively short co-rotating twin-screw extruder, L/D=23, provided reverse screw elements (RSE's) are incorporated in the screw configuration. The main plasticizer in this system is added water, with a minor amount of glycerol. Native starch processed this way yields amorphous thermoplastic starch. X-ray diffraction measurements confirm that full destructurization is obtained without residual cristallinity.

The composition is obtained through extrusion compounding of the raw materials, where the thermoplastic starch is obtained from granular starch and transformed to thermoplastic starch in that same extrusion step, prior to compounding. Processing aids as plasticizers and lubricants can be added during extrusion to facilitate destructurization of starch (also referred to as gelatinization). It is well known in the art how to achieve destructurization of granular starch in an extrusion process: applying shear forces under elevated temperatures, preferably in the presence of (added) water. It is not an aim of the invention to amend the destructurizing process itself.

Additional processing aids such as plasticizers and lubricants may be present during extrusion. These plasticizers and lubricants are beneficial for the destructurization of the native starch. Polyols (such as diethylene glycol, glycol, glycerol, sorbitol and the like) make suitable plasticizers. These plasticizers are called " plasticizers for starch" , thus distinguishing those from plasticizers (c) for the vinylester polymer. Glycerol and water are the preferred plasticizer for starch in the present invention, with a content of 3-30% w/w (based on the weight of the raw starch). In one embodiment, the plasticizer(s) added to the destructurization step is/are free from diacetin and/or analogues thereof. Suitable lubricants are vegetable oils such as palm oil, peanut oil, and sunflower oil (essentially the fatty acids contained therein); and stearates of zinc, calcium and magnesium. The total of lubricants ranges from 0-5% w/w based on the weight of the raw starch.

The starch provided in step (i) should be understood to comprise a starch-containing material. Suitable as raw material for thermoplastic starch is natural starch from vegetable sources, e.g. from potato, wheat, corn, tapioca, rice, and peas (including starch from genetically modified starch-producing plants); and chemically or physically modified starch (oxidised, carboxymethylated, hydroxyalkylated, enzymatically treated starch and the like). Other natural starchy materials that contain a high proportion of starch are suited as well. Examples of a suitable starchy materials are flour such as wheat flour (about 73% starch) or pretreated wheat flour, i.e. after removal of fibers (about 84% starch). Natural starch is commonly obtained from crops of plants specifically grown for their starch production. In the present invention starches generated from the food producing industry as by-product are considered very suitable as well. This means that no additional crops have to be grown to provide the starch for the present invention and no additional agricultural areas have to be utilized. In particular is mentioned so-called cake starch, a side-stream potato starch from the potato-processing industry, which is the preferred starch of the present invention. Prior to the extrusion compounding of the mixture the cake starch may be subjected to a purification step to minimize the amount of unwanted content (i.e. proteins and cellulose). In the present invention, the term starch encompasses natural starch, modified starch and starchy material as described above. Although not preferred, it is possible that the starch provided to the extrusion process has been subjected to destructurization to some extent; it is preferred that less than 10% of all starch provided to the extrusion is thermoplastic starch, more preferably less than 5%, even more preferably less than 1%, most preferably the starch provided to the extrusion contains no detectable levels of thermoplastic starch. Also, the presence of crystalline starch in the compounded product is to be minimized. It is preferred that less than 5 wt%, more preferably less than 2 wt% of the starch present after compounding is crystalline.

The vinyl ester polymer intended as component (b) is selected from the group of vinyl ester homo, co- and/or terpolymers. Suitable vinyl esters are vinyl esters of straight-chain or branched carboxylic acids having 1 to 15 carbon atoms. Non-limiting examples of such polymers are polymers based on vinylacetate, vinyl propionate, vinyl butyrate, vinyl 2-ethylhexanoate, vinyl laurate, 1-methyl vinyl acetate, vinyl pivalate and vinyl esters of alpha-branched monocarboxylic acids having 9 to 11 carbon atoms. Vinyl acetate polymers are particularly preferred, including copolymers of vinylacetate/ethylene, vinylacetate/ethylene/vinyllaurate, vinylacetate/ethylene/vinyl ester of versatic acid or combinations thereof. These vinyl ester homo, co- and/or terpolymers are stabilized by a protective colloid/emulsifier system for instance based on polyvinyl alcohol or a surfactant. Details can be found in US 6,576,698, its contents herein incorporated by reference. These stabilizers (and the amounts thereof) are considered incorporated in the term vinyl ester homo-, co- of terpolymer.

The preferred materials for component (b) are the materials manufactured by Wacker Chemie GmbH and currently commercially available under the tradenames Vinnapas^{®} and Vinnex^{®}. These materials are available as dispersible powders or as watery dispersions and are suited for the extrusion compounding process in both conditions. Multiple grades are available (for instance through variations in molecular weights or chemical structures) resulting in varying properties such as flexibility and glass transition temperature. Using grades that have a glass transition temperature lower than standard PVAc (i.e. 30°C) enables a composition as proposed in the present invention to retain flexible properties. The ratio of the components (a) and (b) and the type of component (b) further dictates the other mechanical properties of the composition.

Optionally, other biodegradable polymers, for example polylactic acid (PLA) or polyhydroxy butyrate (PHB), can be added during the extrusion compounding for further optimization of required properties, e.g. heat deflection temperature and mechanical properties.

Compounding or extrusion compounding is performed with conventional equipment. It preferably involves co-rotating twin screw extrusion (L/D ranging from 34 to 60) with the possibility of degassing on the barrel. Extruded material is preferably pellitized with underwater pellitizing at the die to obtain pellets that optionally can be dried to desired moisture content. Depending on the specific formulation the pellets are suited for known thermoplastic processing techniques such as injection moulding, sheet extrusion and subsequent thermoforming, blow moulding, and foaming.

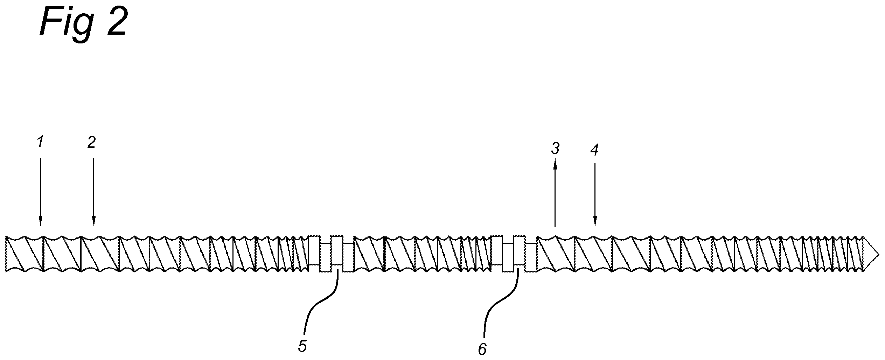

In a preferred embodiment, the composition is obtained through extrusion processing where all components in the composition are mixed/compounded in a single manufacturing step, preferably extrusion, starting from native starch. With exception of the vinyl ester plasticizer (component (c)), all components are added at the beginning of a twin-screw extruder (L/D from 34 to 60). Figure 2 shows the schematic configuration of the extrusion process. Raw materials and additives are added at **1** (for solids) and **2** (for fluids). In accordance with the prior art, the screw configuration is characterized by the presence of reverse screw elements to ensure full destructurization of the native starch. To further obtain effective mixing of the components kneader elements are also incorporated in the screw configuration. Collectively, the combination of kneader and reverse screw elements are referred to as high shear zones. These high shear zones are located at **5** and **6.** The first high shear zone **(5)** is located at about 0.3-0.4 L from the raw material input. The second high shear zone **(6)** is located at about 0.55-0.65 L.

The second high shear zone is followed by a degassing point **(3).** At this point, the raw starch has been converted into thermoplastic starch and a blend of thermoplastic starch with the vinyl ester polymer as dispersed phase is obtained. Degassing (atmospheric or through a vacuum pump) is followed by the addition of diacetin **(4)** after which phase inversion occurs in the remaining length of the extruder. Degassing the blend, i.e. removing (part of) the water from the thermoplastic starch portion means removing plasticizer with an increase in viscosity of the thermoplastic starch as result. The addition of the plasticizer (c) ensures that the viscosity of the vinyl ester polymer is below the starch viscosity facilitating the phase inversion. After exiting the extruder the obtained blend is pelletized and optionally can be dried to achieve the preferred moisture content. Depending on the exact formulation of the composition (in particular, the presence or absence of additional biodegradable plastics) the temperatures on the barrel of the extruder increase from about 80 °C at the raw material input to 170 °C at the high shear zones, and decrease to about 100 °C at the end of the extruder.

In another aspect, the invention pertains to a biodegradable composition containing thermoplastic starch and a vinyl ester polymer, wherein said vinyl ester polymer is comprised in a continuous matrix and said thermoplastic starch is comprised in a dispersed phase, wherein at least 80 % of the dispersed phase has a size larger than 10 µm, preferably up to 150 µm; the size is averaged and determined by the largest cross section; the amount calculated on the basis of the total dispersed volume. The composition is obtained or obtainable by the above-described process. The content of crystalline starch, if any, is minimal. It is preferred that the composition contains less than 2 wt% of crystalline starch, more preferably less than 1 wt%, most preferably below detectable levels. These numbers are based on the total weight of the composition.

In one embodiment, the composition contains from 70-85% w/w of thermoplastic starch (any remaining 'unplasticized' or native starch is incorporated in this number). The thermoplastic starch may contain (added) water, plasticizers and other processing aids such as lubricants. The composition preferably comprises 4-30% w/w of vinyl ester polymer (b). The composition preferably comprises from 0.5-10% w/w, more preferably 3 - 9 wt% of one or more plasticizer(s) for component (b), based on total weight of the composition. Non-limiting examples of suitable plasticizers are diacetin, triacetin, acetyl tributyl citrate, acetyl triethyl citrate, tributyl citrate, and triethyl citrate. In analogy with the plasticizers for the starch, it is possible that certain plasticizers suited for the vinyl ester polymer may have some plasticizing effect on the starch. Such plasticizers are considered suitable -though not preferred- provided the plasticizing effect on the vinyl ester polymer is larger than the effect on the starch. The preferred plasticizer is diacetin because its ineffectiveness as plasticizer for starch.

The total composition preferably has a water content ranging from 0.7-5% w/w (more preferably 0.8-2% w/w) contained within the thermoplastic starch portion of the composition. The composition can optionally contain from 0-10% w/w (with regard to the total of components a, b and c) of other additives typically used in plastics (processing) such as colorants, optical brighteners, nucleating agents, blowing agents, and the like, that deliver their functionality during subsequent thermoplastic processing of the composition or during the use of shaped product made from the composition. Other additives are possible where the biodegradable nature of the composition is utilized: the composition then functions as carrier for slow or controlled release systems. As the composition (or the shaped product thereof) biodegrades the functional additive, e.g. a fertilizer is released into the environment.

As mentioned above, other biodegradable polymers may be added. Dependent on the specific demands of the finished product that is to be made from the composition, it is possible to further enhance the properties of the composition by incorporating additional biodegradable plastics. Examples of possible additional bioplastics are polylactic acid (PLA), polycaprolacton (PCL), polybutylene succinate (PBS), polyhydroxybutyrate (PHB), and poly(butylene adipate-co-terephthalate (PBAT). For instance, PBS could be used to improve the tear resistance of extruded or blown films, and PHB could be used to increase the heat deflection temperature. Additional bioplastics are incorporated in the described extrusion/compounding process by adding them to the solids that constitute the raw material input. PLA and/or PHB are particularly preferred. If added, these biodegradable polymers other than the vinyl ester polymer preferably amount to 50 wt%, preferably between 1 and 50 % of the total weight of the composition. These other biodegradable polymers may be added prior to destructurization and/or during subsequent compounding.

In yet another aspect, the invention pertains to articles comprised of or made from the composition according to the invention. The composition is among others suited for applications requiring a life span of at least 6 months. Hence, in a preferred embodiment, the articles are biodegradable (according to ISO 14855), yet have a life span of at least 6 months. Examples of such applications are wine clips and tomato clips that have to last the whole growing season but still have the ability to biodegrade. However, it is noted that the composition is not limited to such applications alone. Despite these longer life spans these compositions are still considered biodegradable, since they break down to CO₂, water and biomass through microbial activity. This can be shown using the test methods described in ISO 14855.

### Examples

As illustration to compositions according to the present invention, table 1 lists the components and their (relative) amounts of examples of such compositions, made by the applicant. Specific conditions of example 1-4 are given below the table. Table 2 lists some of the resulting mechanical properties (for example 1-3 from injection moulded tensile test bars, from example 4 from blown film) to illustrate the possibility to control those properties.

**Table 1**

| Component | | Content [%] | | | |
|---|---|---|---|---|---|
| | | Ex. 1 | Ex. 2 | Ex. 3 | Ex. 4 |
| 1 | Potato starch (cake starch) | 69 | 55 | 31.5 | 30 |
| 2 | Vinnex^{®} 2504 | 30 | 7.5 | 15 | 4.3 |
| 3 | Vinnex^{®} 2505 | - | - | - | 21 |
| 4 | Vinnex^{®} 2510 | - | 14 | 8 | - |
| 5 | PLA | - | 22.5 | 45 | 37 |
| 6 | Magnesium stearate | 1 | 1 | 0.5 | 0.5 |
| 7 | Added water* | 14 | 12 | 10 | - |
| 8 | Glycerol* | 12 | 10 | 30 | 7 |
| 9 | Palm oil* | - | 1 | 1 | - |
| 10 | Diacetin** | 3 | 3 | 3 | 3 |
| 11 | Joncryl ADR 4370 | - | - | - | 0.2 |

| | | | | | |
|---|---|---|---|---|---|
| * The percentages of added water, glycerol and palm oil are calculated with respect to the total of component 1, 2, 4 and 6 in example 1-3. ** The percentage of diacetin is calculated with respect to the total of components 1-4, 6, 8 and 9 in example 1-3. In example 4, the percentages of the components are with regard to the total (100%) with the exception of diacetin. Here the diacetin is 3% of the total composition. | | | | | |

### Examples 1 and 2:

Component 1 through 9 (if present in the composition, see table 1) were fed into the hopper of a Berstorff ZE40A co-rotating twin screw extruder (L/D = 38) with a temperature profile of 20/70/110/110/110/100/100/95 °C at 130 rpm. Atmospheric degassing took place at 0.7L, directly followed by the addition of diacetin (at the next available injection port). The material was cut to pellets through underwater pelletizing.

### Example 3:

Component 1 through 9 (if present in the composition, see table 1) were fed into the hopper of a Berstorff ZE40A co-rotating twin screw extruder (L/D = 38) with a temperature profile of 20/70/110/140/145/145/100/95 °C at 130 rpm. Atmospheric degassing took place at 0.7L, directly followed by the addition of diacetin. The material was cut to pellets through underwater pelletizing.

### Example 4:

Component 1 through 6 (if present in the composition,see table 1) were fed into the hopper of a Bühler DNDG62 co-rotating twin screw extruder (L/D = 40) with a temperature profile of 20/100/145/145/140/140/120/90/80 °C. Component 8 was added as liquid through an injection port in the first barrel section after the hopper. Atmospheric degassing took place at 0.65L, directly followed by the addition of diacetin. The material was cut to pellets through underwater pelletizing.

The pellets obtained in example 1-3 were used for injection moulding of tensile test samples. The pellets obtained from example 4 were used for film blowing to obtain a nearly transparent film with a thickness of around 55 microns.

**Table 2**

| Property | example 1 | example 2 | example 3 | example 4 |
|---|---|---|---|---|
| E-modulus [MPa] | 100 | 2100 | 1490 | n.d. |
| Tensile strength [MPa] | | 30 | 25 | 19 |
| Strain at break [%] | 65 | 5 | 18 | 85 |

| | | | | |
|---|---|---|---|---|
| n.d. = not determined | | | | |

Material was tested in duplo for biodegradability over a time span of 180 days, in accordance with the test method described in ISO 14855 (tests performed by Organic Waste System in Belgium). The average absolute biodegradation at the end of the test was 79.9 %, which was 94.5 % on relative basis with cellulose as suitable reference material (tested simultaneously). This is over the 90 % limit that ISO 14855 defines as minimum value to be accepted as biodegradable.

### References

1. D. Lourdin, L. Coignard, H. Bizot, and P. Colonna, Influence of equilibrium, relative humidity and plasticizer concentration on the water content and glass transition of starch materials, Polymer, 1997 38(21), p. 5401-5406.
**2.** R. Van Tuil, J. Van Heemst, G. Schennink, Potato starch based resilient thermoplastic foams, ICBT Conference proceedings 1999, Elsevier, 2000. Reprinted in Biorelated Polymers, Sustainable Polymer Science and Technology, E. Chiellini (ed.) et al., Springer-Verlag, 2001.

## Claims

1. A process for manufacturing a biodegradable composition, wherein said process involves compounding of at least (a) starch, (b) vinyl ester polymer and (c) one or more plasticizer(s) for component (b), wherein said one or more plasticizer(s) (c) is only brought into contact with said starch (a) and optionally part of the vinyl ester polymer (b) after starch destructurization, and wherein after destructurization thermoplastic starch is present in an amount of 70 - 85% w/w.

2. A process for manufacturing a biodegradable composition, comprising (i) starch destructurization, to obtain (a) destructurized or thermoplastic starch (TPS), and (ii) subsequent compounding of said TPS with (b) a vinyl ester polymer and (c) one or more plasticizer(s) for component (b), wherein said one or more plasticizer(s) (c) is introduced into the process only in step (ii), and wherein after destructurization thermoplastic starch is present in an amount of 70 - 85% w/w.

3. The process according to any one of the preceding claims, wherein said vinyl ester polymer is selected from the group consisting of vinyl ester homo, co- and/or terpolymers and combinations thereof, or wherein said vinyl ester polymer comprises vinylacetate polymer or a copolymer comprising vinylacetate.

4. The process according to any one of the preceding claims, wherein said vinyl ester plasticizer (c) comprises diacetin.

5. The process according to any one of the preceding claims, wherein compounding involves extrusion, preferably twin screw extrusion.

6. The process according to any one of the preceding claims, wherein the destructurization and subsequent compounding, are performed in the same extrusion process.

7. The process according to any one of the preceding claims, wherein said plasticizer (c) is introduced after removal of excess water from the TPS trough degassing.

8. The process according to claim 7, wherein said plasticizer (c) is introduced at or after L/D = 20, preferably between L/D 20 and 30.

9. A biodegradable composition containing thermoplastic starch and a vinyl ester polymer, wherein said vinyl ester polymer is comprised in a continuous matrix and said thermoplastic starch is comprised in a dispersed phase, wherein at least 80 % of the dispersed phase has a size larger than 10 µm, and wherein said thermoplastic starch is present in an amount of 70 - 85% w/w.

10. The composition according to claim 9, obtained or obtainable by the process according to any one of claims 1 - 8.

11. The composition according to any one of claims 9 - 10 , further containing 0.5-10 wt% diacetin, based on the total weight of the composition.

12. A biodegradable article comprising or consisting of the composition according any one of claims 9 - 11.

13. Use of the composition according to any one of claims 9 - 12 for producing biodegradable articles.

## Patentansprüche

1. Verfahren zur Herstellung einer biologisch abbaubaren Zusammensetzung, wobei das Verfahren Compoundierung von mindestens (a) Stärke, (b) Vinylesterpolymer und (c) einem oder mehreren Weichmacher(n) für Komponente (b) aufweist, wobei der eine oder mehrere Weichmacher (c) erst nach der Destrukturierung der Stärke in Kontakt mit der Stärke (a) und optional einem Teil des Vinylesterpolymers (b) gebracht wird, und wobei nach der Destrukturierung thermoplastische Stärke in einer Menge von 70 - 85 Gewichts-% vorhanden ist.

2. Verfahren zur Herstellung einer biologisch abbaubaren Zusammensetzung, welches Folgendes aufweist: (i) Destrukturierung von Stärke, um (a) destrukturierte oder thermoplastische Stärke (TPS) zu erhalten und (ii) anschließende Compoundierung des TPS mit (b) einem Vinylesterpolymer und (c) einem oder mehreren Weichmacher(n) für Komponente (b), wobei der eine oder die mehreren Weichmacher (c) nur in Schritt (ii) in das Verfahren eingebracht werden, und wobei nach der Destrukturierung thermoplastische Stärke in einer Menge von 70 - 85 Gewichts-% vorhanden ist.

3. Verfahren nach einem der vorhergehenden Ansprüche, wobei das Vinylesterpolymer aus der Gruppe ausgewählt ist, die aus Vinylester-Homo, Cound/oder -Terpolymeren und Kombinationen davon besteht, oder wobei das Vinylesterpolymer Vinylacetatpolymer oder ein Copolymer, welches Vinylacetat aufweist, aufweist.

4. Verfahren nach einem der vorhergehenden Ansprüche, wobei der Vinylester-Weichmacher (c) Diacetin aufweist.

5. Verfahren nach einem der vorhergehenden Ansprüche, wobei die Compoundierung eine Extrusion beinhaltet, vorzugsweise eine Doppelschneckenextrusion.

6. Verfahren nach einem der vorhergehenden Ansprüche, wobei die Destrukturierung und anschließende Compoundierung in dem gleichen Extrusionsverfahren durchgeführt werden.

7. Verfahren nach einem der vorhergehenden Ansprüche, wobei der Weichmacher (c) nach der Entfernung von überschüssigem Wasser aus der TPS durch Entgasung eingeführt wird.

8. Verfahren nach Anspruch 7, wobei der Weichmacher (c) eingeführt wird wenn oder nachdem L/D = 20 ist, vorzugsweise L/D zwischen 20 und 30 ist.

9. Biologisch abbaubare Zusammensetzung, welche thermoplastische Stärke und ein Vinylesterpolymer aufweist, wobei das Vinylesterpolymer in einer kontinuierlichen Matrix enthalten ist, und die thermoplastische Stärke in einer dispergierten Phase enthalten ist, wobei mindestens 80% der dispergierten Phase eine Größe von mehr als 10 µm hat, und wobei die thermoplastische Stärke in einer Menge von 70 - 85 Gewichts-% vorhanden ist.

10. Zusammensetzung nach Anspruch 9, erhalten oder erhältlich durch das Verfahren nach einem der Ansprüche 1 - 8.

11. Zusammensetzung nach einer der Ansprüche 9 - 10, welche ferner 0,5 - 10 Gewichts-% Diacetin aufweist, und zwar bezogen auf das Gesamtgewicht der Zusammensetzung.

12. Biologisch abbaubarer Gegenstand, der die Zusammensetzung gemäß einem der Ansprüche 9 - 11 aufweist oder aus ihr besteht.

13. Verwendung der Zusammensetzung nach einem der Ansprüche 9 - 12, um biologisch abbaubare Gegenstände herzustellen.

## Revendications

1. Procédé de fabrication d'une composition biodégradable, dans lequel ledit procédé implique le compoundage d'au moins (a) de l'amidon, (b) un polymère d'ester vinylique et (c) un ou plusieurs plastifiants pour le composant (b), dans lequel ledit/lesdits un ou plusieurs plastifiant(s) (c) est/sont uniquement amené(s) en contact avec ledit amidon (a) et facultativement avec une partie du polymère d'ester vinylique (b) après déstructuration de l'amidon, et dans lequel après déstructuration de l'amidon thermoplastique est présent selon une quantité de 70 à 85 % poids/poids.

2. Procédé de fabrication d'une composition biodégradable, comprenant (i) une déstructuration d'amidon, pour obtenir (a) un amidon déstructuré ou thermoplastique (TPS), et (ii) après compoundage dudit TPS avec (b) un polymère d'ester vinylique et (c) un ou plusieurs plastifiants pour le composant (b), dans lequel ledit/lesdits un ou plusieurs plastifiant(s) (c) est/sont introduit(s) dans le processus uniquement à l'étape (ii), et dans lequel après déstructuration l'amidon thermoplastique est présent dans une quantité de 70 à 85 % poids/poids

3. Procédé selon l'une quelconque des revendications précédentes, dans lequel ledit polymère d'ester vinylique est sélectionné parmi le groupe constitué d'homo, co- et/ou terpolymères et de combinaisons de ceux-ci, ou dans lequel ledit polymère d'ester vinylique comprend un polymère d'acétate de vinyle ou un copolymère comprenant de l'acétate de vinyle.

4. Procédé selon l'une quelconque des revendications précédentes, dans lequel ledit plastifiant d'ester vinylique (c) comprend de la diacétine.

5. Procédé selon l'une quelconque des revendications précédentes, dans lequel le compoundage implique une extrusion de préférence une extrusion à double vis.

6. Procédé selon l'une quelconque des revendications précédentes, dans lequel la déstructuration et le compoundage ultérieur, sont effectués dans le même processus d'extrusion.

7. Procédé selon l'une quelconque des revendications précédentes, dans lequel ledit plastifiant (c) est introduit après enlèvement de l'eau en excès à partir du TPS par l'intermédiaire d'un dégazage.

8. Procédé selon la revendication 7, dans lequel ledit plastifiant (c) est introduit au niveau de L/D = 20 ou après, de préférence entre L/D 20 et 30.

9. Composition biodégradable contenant un amidon thermoplastique et un polymère d'ester vinylique, dans lequel ledit polymère d'ester vinylique est constitué en une matrice continue et ledit amidon thermoplastique est constitué en une phase dispersée, dans lequel au moins 80 % de la phase dispersée a une dimension plus grande que 10 µm, et dans lequel ledit amidon thermoplastique est présent dans une quantité de 70 à 85 % poids/poids.

10. Composition selon la revendication 9, obtenue ou pouvant être obtenue par le procédé selon l'une quelconque des revendications 1 à 8.

11. Composition selon l'une quelconque des revendications 9 à 10, contenant de plus 0,5 à 10 % en poids de diacétine, sur la base du poids total de la composition.

12. Article biodégradable comprenant ou étant constitué de la composition selon l'une quelconque des revendications 9 à 11.

13. Utilisation de la composition selon l'une quelconque des revendications 9 à 12 pour produire des articles biodégradables.
